Europäisches Patentamt

European Patent Office

Office européen des brevets

(19)

(11) EP 0 494 015 B1

(12) **FASCICULE DE BREVET EUROPEEN**

(45) Date de publication et mention
de la délivrance du brevet:
**06.03.1996 Bulletin 1996/10**

(51) Int Cl.6: **C04B 28/00**, B32B 13/06,
C01B 33/26, C04B 28/24

(21) Numéro de dépôt: **91403517.5**

(22) Date de dépôt: **23.12.1991**

(54) **Matériaux isolants thermiques à haute température et leur procédé de fabrication**

Hochtemperatur thermische Isoliermaterialien und Verfahren zu ihrer Herstellung

High-temperature thermal insulating materials and process for their manufacture

(84) Etats contractants désignés:
**DE FR GB**

(30) Priorité: **03.01.1991 FR 9100028**

(43) Date de publication de la demande:
**08.07.1992 Bulletin 1992/28**

(73) Titulaire: **SOCIETE NATIONALE
DES POUDRES ET EXPLOSIFS
F-75181 Paris Cédex 04 (FR)**

(72) Inventeurs:
• **Cornelis, Bernard**
**F-91810 Vert le Grand (FR)**

• **Larrere, Yves**
**F-91590 La Ferte Alais (FR)**
• **Neel, Ludovic**
**F-76490 Villequier (FR)**

(74) Mandataire: **Pech, Bernard et al
Sté Nationale des Poudres et Explosifs
12, quai Henri IV
F-75181 Paris Cédex 04 (FR)**

(56) Documents cités:
EP-A- 26 687          EP-A- 153 097
EP-A- 0 356 320       WO-A-82/00816
WO-A-88/02741         CA-A- 937 149
DE-A- 2 500 151       FR-A- 2 314 158
FR-A- 2 359 944       FR-A- 2 512 808
GB-A- 1 443 754

## Description

La présente invention se rapporte à des matériaux isolants thermiques qui peuvent se présenter sous forme de pièces ou de panneaux rigides et à leur procédé de préparation. En particulier la présente invention se rapporte à des matériaux légers, poreux, isolants thermiques à haute température constitués principalement par un liant minéral à base de silico-aluminates alcalins et par des charges minérales réfractaires.

Les matériaux d'isolation contre les hautes températures tels que ceux utilisés dans le bâtiment et l'industrie peuvent être des matériaux denses de porosité totale inférieure à 45% en volume. Ils présentent de bonnes caractéristiques mécaniques mais une conductivité thermique relativement élevée. On trouve ainsi dans cette catégorie, des matériaux ayant une conductivité thermique à la température ambiante de l'ordre de 1 W/m.K. pour une densité apparente supérieure ou égale à 2 avec une résistance à la compression comprise entre plusieurs dizaines et une centaine de MPa. Ils peuvent également être des matériaux à porosité élevée, supérieure ou égale à 45% en volume. Leur conductivité thermique est convenable mais leurs propriétés mécaniques sont généralement médiocres. Des matériaux représentatifs de cette catégorie possèdent une conductivité thermique à la température ambiante comprise entre 0,2 à 0,5 W/m.K. pour une densité apparente de 0,5 à 1 avec une résistance à la compression de quelques MPa. Des matériaux à base de fibres céramiques agglomérées ont une conductivité thermique inférieure à 0,1 W/m.K. à la température ambiante pour une densité apparente inférieure à 0,5 et une porosité supérieure à 85% mais leurs propriétés mécaniques sont faibles et de plus leur conductivité thermique augmente rapidement avec la température et ce d'autant plus que leur porosité est élevée.

Il existait donc un besoin d'un nouveau matériau isolant thermique qui ne présente pas les inconvénients des matériaux antérieurs et qui possède à la fois de bonnes caractéristiques mécaniques et une conductivité thermique faible.

Le nouveau matériau isolant thermique selon l'invention est constitué par (1) 40% à 95% en volume par rapport au volume total du matériau d'un liant minéral microporeux qui résulte de la réaction de polycondensation minérale d'une composition à base de silico-aluminates alcalins et par (2) 5% à 60% en volume par rapport au volume total du matériau de charges minérales réfractaires.

Ce nouveau matériau présente une masse volumique apparente faible, une porosité importante, une conductivité thermique faible qui varie très peu avec la température ce qui lui confère un excellent pouvoir isolant en particulier à des températures comprises entre environ 600° à 1000°C et de bonnes propriétés mécaniques dans cette gamme de température. Il est ininflammable, incombustible et ne présente pas de variation dimensionnelle en atmosphère humide. Une partie de l'eau présente au cours de sa préparation reste à l'intérieur du matériau, ce qui lui permet de mieux résister à un flux thermique et d'être un meilleur isolant thermique. Son coût de revient est faible en raison de sa mise en oeuvre à des températures peu élevées, inférieures ou égales à 150°C.

Les liants qui sont utilisés pour réaliser le matériau selon l'invention sont des liants entièrement minéraux obtenus par la polycondensation d'une composition à base de silico-aluminates alcalins, en particulier de sodium et/ou de potassium.

Ils peuvent être de type poly(sialate) (PS) et/ou poly-(sialate-siloxo) (PSS). Des liants de ce type sont par exemple décrits dans les brevets français n° 2 464 227, 2 489 290 et 2 489 291.

EP-A-26687 et WO-A-8200816 décrivent des liants de ce type associés avec différentes charges inorganiques.

EP-A-153097 décrit un liant de ce type associé avec une charge inorganique qui comprend de l'argile expansée finement broyée.

Les liants préférés sont les liants du type polysialate-disiloxo (PSDS), en particulier de potassium.

Ces liants sont généralement préparés comme décrit dans les brevets précédemment cités par mélange de deux précurseurs, souvent sous forme d'un liquide et d'une poudre ou de deux liquides.

Le liant préféré selon l'invention est obtenu à partir d'un précurseur liquide (A) qui est une solution alcaline de silicate et d'un précurseur en poudre (B) qui contient un alumino-silicate et de la silice thermique. Les deux précurseurs sont mélangés dans un rapport massique A/B compris généralement entre 0,5 et 2. De préférence, ce rapport est voisin de 1,25.

Le mélange est fait, en général, à la température ambiante dans un mélangeur à hélice rapide en quelques minutes. Il est ensuite mis au repos pendant quelques minutes à quelques heures, de préférence pendant deux à trois heures avant d'ajouter les charges.

Les charges utilisées sont des matières minérales réfractaires telles qu'en particulier des céramiques et des alumino-silicates. Elles sont sous forme de particules granulaires poreuses et/ou creuses de dimension supérieure ou égale à 5 microns et de préférence inférieure ou égale à 500 microns et/ou sous forme de fibres courtes. Leur température de fusion ou de transformation est, en général, supérieure ou égale à 1200°C. Des charges ayant une température de ramollissement comprise entre 600°C et 1200C° telles qu'en verre peuvent être utilisées dans une proportion maximale de 50% en volume par rapport à la totalité du volume des charges. La répartition granulométrique des particules est de préférence dispersée, par exemple, pouvant aller de 10 à 300 microns. Le diamètre des fibres est de préférence inférieur ou égal à 100 microns et leur longueur est de préférence inférieure ou égale à 10 millimètres. Les particules granulaires poreuses et/ou creuses sont par exemple, des microballons. Des combinaisons de charges qui conviennent bien comprennent de 40 à 54% en volume de particules poreuses et/ou creuses et 1 à 10 % en volume de fibres courtes par rapport au volume total du matériau.

D'autres charges telles que ferrites, corindon, carbure de silicium, quartz peuvent également être ajoutées pour améliorer le caractère réfractaire du matériau. Leurs caractéristiques granulométriques et dimensionnelles sont de préférence telles qu'indiqué précédemment.

Le volume des charges dans le matériau isolant est compris entre 5 et 60% et de préférence entre 15 et 55% en volume par rapport au volume total du matériau.

Les charges et le liant minéral sont généralement mélangés soit dans un mélangeur à hélice rapide si le volume des charges n'est pas très important soit dans un malaxeur afin d'obtenir une bonne homogénéisation. Le temps de malaxage varie de quelques minutes à quelques heures suivant le degré d'homogénéité recherché et l'aptitude des charges à supporter les contraintes de cisaillement.

Le mélange est ensuite durci par chauffage en évitant l'évaporation de l'eau qu'il contient. La température de durcissement est généralement comprise entre 40° et 150°C.

La combinaison du liant et des charges selon l'invention permet d'obtenir un matériau comprenant des pores de différentes dimensions, qui possède une conductivité thermique faible et pratiquement stable et un caractère réfractaire, en particulier à des températures comprises entre environ 20° et 1000°C, ce qui lui confère un caractère d'isolant thermique dans cette gamme de température.

Ses propriétés mécaniques sont également bonnes dans cette gamme de température en particulier sa tenue en compression qui varie peu lors d'un échauffement et elles ne se modifient pas en atmosphère humide. Son coefficient de dilatation thermique peut d'autre part être adapté pour permettre l'assemblage avec un autre matériau.

La mise en forme du matériau isolant est effectuée de manière analogue à celle des matériaux à base de résines organiques thermodurcissables, avant le durcissement du mélange.

Par exemple, lorsque le mélange n'est pas très visqueux, il peut être coulé dans un moule qui est ensuite fermé hermétiquement afin d'éviter l'évaporation de l'eau et chauffé. Le temps de chauffage varie en fonction de la température et de l'épaisseur de matières à mouler. Dix minutes à 150°C peuvent suffire. A 60°C, il est généralement compris entre 2 et 3 heures. Le moule peut être préchauffé à une température inférieure ou égale à la température de prise en masse du liant afin de permettre la mise en forme préalable.

Lorsque le mélange est très visqueux, il est souvent nécessaire d'effectuer le moulage sous pression. Des pressions uniaxiales au moyen de presses ou isostatiques en autoclave peuvent être utilisées. La pression peut être appliquée sur le moule à froid et maintenue ou non pendant le chauffage ou elle peut être appliquée à chaud. Lorsque le mélange est très chargé, il peut être nécessaire d'appliquer des pressions élevées pouvant dépasser la dizaine de MPa.

Le matériau durci est ensuite démoulé et éventuellement séché pout évacuer si nécessaire l'eau qu'il contient et pour améliorer sa stabilité dimensionnelle.

L'usinage des pièces ne demande pas de précautions particulières contrairement à celles réalisées, par exemple, en céramique technique.

Les matériaux selon la présente invention conviennent particulièrement bien pour la protection anti-feu et thermique en particulier aux températures comprises entre environ 600°C et 1000°C, en particulier dans le bâtiment, les véhicules et en fonderie.

Leur surface a de plus un aspect glacé et marbré qui est très décoratif et il n'est, par conséquent, pas nécessaire de les peindre.

Afin d'améliorer les propriétés mécaniques du matériau, on peut lui adjoindre au moins un renfort constitué d'un ou plusieurs feutres, mats ou tissus identiques ou différents de nature minérale, organique et/ou métallique. Comme matières qui conviennent bien pour ces renforts, on peut citer le verre, les céramiques par exemple l'alumine ou le carbure de silicium, les polyesters, les aramides, l'acier inoxydable ou le cuivre.

Le renfort peut revêtir une ou plusieurs faces du matériau. En général, on place les feutres, mats ou tissus, sur les faces intérieures du moule avant l'introduction du mélange à durcir. Lors de l'opération de mise sous pression, les renforts sont imprégnés par le liant minéral et après durcissement ils sont, par conséquent, solidaires de la pièce.

L'utilisation de ces renforts en surface permet d'améliorer les propriétés en flexion du matériau ainsi que sa résistance au choc. Sa souplesse mécanique peut être également améliorée suivant la nature des renforts. De plus, le matériau lorsqu'il est fissuré est maintenu entier par le renfort de surface, ce qui retarde sa rupture. Les tissus ou mats métalliques ont aussi un rôle de réflecteur de chaleur en diminuant l'émissivité de surface des pièces. De plus, ils permettent, grâce à leur caractère conducteur, de diffuser une agression thermique localisée sur une grande surface ce qui limite les gradients thermiques et améliore ainsi la tenue du matériau au choc thermique.

Selon une variante préférée, les deux faces du matériau sous forme de panneau sont chacune revêtues par un renfort constitué par un tissu métallique, en particulier une toile en acier inoxydable ou en en acier galvanisé de vide de maille compris entre 1 à 5 mm, placé du côté du matériau, et par un mat de verre, côté extérieur, en particulier de masse surfacique comprise entre 200 à 500 g/m$^2$.

Une autre amélioration consiste à réaliser un matériau comportant des couches alternées du matériau isolant et du renfort.

Les exemples qui suivent illustrent l'invention sans toutefois la limiter.

Exemple 1

On prépare un matériau isolant à partir des constituants suivants :

|  | Parties en poids |
|---|---|
| (1) Précurseur liquide GP 70 A de la résine de type PSDS, vendu par la Société GEOPOLYMERE | 43 |
| (2) Précurseur en poudre GP 140 B, vendu par la Société GEOPOLYMERE | 33 |
| (3) Fibres courtes en alumino-silicates (diamètre moyen : 2-3μm, longueur moyenne avant incorporation: 0,6mm, température de ramollissement: 1260°C) | 24 |

Le liant de type PSDS est obtenu par mélange des constituants (1) et (2) dans un mélangeur à hélice pendant 15 minutes. Puis, il est laissé pendant une heure à la température ambiante. On le mélange ensuite avec les fibres (3) dans un malaxeur horizontal pendant 1 à 2 heures jusqu'à l'obtention d'un mélange homogène. On l'introduit dans un moule positif qui est mis sous presse, on comprime la matière jusqu'à au moins 4 MPa et on chauffe à une température comprise entre 80°C et 120°C pendant 40 à 10 minutes. La pièce obtenue est démoulée. Elle est constituée par 81% en volume de liant et 19% en volume de charges. Elle est ensuite séchée en étuve à 60°C quelques heures ou chauffée à 400°C pendant vingt heures.

Les propriétés de la pièce sont les suivantes :

Densité apparente : 1,6 (pièce séchée à 60°C) 1,8 (pièce chauffée à 400°C).

Compression (par mesure inspirée de la norme NF - C 26 -400) :

|  | Résistance $\sigma_R$ en MPa | Déformation à la rupture $\varepsilon_R$ en % | Module E en GPa |
|---|---|---|---|
| Pièce séchée à 60°C | 112 | – 4,6 | 3,1 |
| Pièce chauffée à 400°C | 93 | – 4,7 | 2,1 |

Conductivité thermique :

| T en °C | 20 | 200 | 400 | 550 | 700 |
|---|---|---|---|---|---|
| λ en W/m.K | 0,42 | 0,48 | 0,54 | 0,56 | 0,60 |

. Porosité totale : 37% en volume dont 30% en volume de microporosité (pores < 1μm) et 7% en volume de macroporosité (pores > 100μm).

Exemple 2

Le matériau isolant est préparé à partir des ingrédients suivants :

(1) Précurseur liquide GP 70 A

(2) Précurseur solide GP 140 B

(3) Microballons en alumino-silicates (poids spécifique : 0,7, répartition granulométrique : 10 à 200 µm, point de fusion 1200°C).

dans les proportions en poids suivantes :

| Formulation | (1) | (2) | (3) |
|---|---|---|---|
| I | 49 | 39 | 12 |
| II | 43 | 35 | 22 |
| III | 31 | 25 | 44 |

Les ingrédients (1) et (2) sont mélangés dans un mélangeur à hélice rapide pendant 15 minutes et on laisse reposer le mélange pendant 2 à 3 heures à la température ambiante. On imprègne ensuite avec ce mélange les microballons dans un mélangeur à l'hélice rapide. Puis les formulations I et II sont coulées dans un moule que l'on ferme hermétiquement et elles sont chauffées à la température de 60° C pendant 5 à 10 heures. La formulation III est soumise à une pression de 1 MPa pendant 3 à 5 minutes puis chauffée comme à l'exemple 1 en maintenant la pression.

Les pièces sont démoulées et séchées à 60°C quelques heures en étuve.

Les caractéristiques obtenues sur pièces finies en équilibre avec le milieu ambiant sont les suivantes :

| Formulation | liant % en volume | charge % en volume |
|---|---|---|
| I | 76 | 24 |
| II | 61 | 39 |
| III | 46 | 54 |

Densité apparente :

| Formulation I | 1,3 |
|---|---|
| Formulation II | 1,1 |
| Formulation III | 0,8 |

Compression :

Après séchage en étuve à 60°C

| Formulation | $\sigma_R$ en MPa | $\varepsilon_R$ en % | E en GPa |
|---|---|---|---|
| I | 50 | 3,5 | 1,8 |
| II | 22 | 3,0 | 1,3 |
| III | 16 | 1,5 | 1,2 |

Après chauffage à 400°C pendant 20 heures

| Formulation | $\sigma_R$ en MPa | $\varepsilon_R$ en % | E en GPa |
|---|---|---|---|
| I | 26 | 2,4 | 1,6 |
| II | 16 | 3,3 | 0,8 |
| III | 19 | 1,8 | 1,6 |

Exemple 3

On prépare un matériau isolant à partir des ingrédients suivants :

| | Parties en poids |
|---|---|
| (1) Précurseur liquide GP 70 A | 37 |
| (2) Précurseur en poudre GP 140 B | 29 |
| (3) Fibres courtes identiques à celles de l'exemple 1. | 7 |
| (4) Microballons identiques à ceux de l'exemple 2. | 27 |

On mélange les constituants (1) et (2) avec un mélangeur à hélice rapide jusqu'à l'obtention d'un mélange homogène. Les fibres courtes (3) sont ensuite imprégnées par le liant comme dans l'exemple 1 et les microballons (4) sont introduits dans les cinq dernières minutes du malaxage. La matière est placée dans un moule et est soumise à une pression inférieure ou égale à 2MPa et à la chaleur comme à l'exemple 1. La pièce est démoulée puis séchée quelques heures en étuve à 60°C. Elle comporte 51% en volume de liant et 49% en volume de charges. Afin de déterminer sa tenue en température, la pièce est chauffée à 400°C pendant 4 heures ou à 800°C pendant 5 heures et ensuite refroidie et testée à la température ambiante.

Les propriétés obtenues sont les suivantes :
Pièce non chauffée :

. Densité apparente       1,1
. Choc Charpy selon la norme NFT51-03       $R = 0,78 \ kJ/m^2$
. Flexion 3 points inspirée de la norme NFB49-110 :
$\sigma_R = 5,6 \ MPa$
       $E = 4,4 \ GPa$
. Conductivité thermique (selon la méthode du fil chaud)

| Température de la pièce | 15°C | 300-400°C | 600°C | 700°C |
|---|---|---|---|---|
| $\lambda$ en W/m.K | 0,14 | 0,18 | 0,19 | 0,20 |

. Coefficient de dilatation après chauffage à 900°C

$$\alpha = 6,4 \ 10^{-6} \ K^{-1}$$

. Porosité totale : 57% en volume dont 37% de macroporosité apportée par les microballons et 20% de microporosité dans le liant.
. Compression :

| | Pièce séchée à 60°C | Pièce chauffée à 400°C 4 h | Pièce chauffée à 800°C 5 h |
|---|---|---|---|
| $\sigma_R$ (MPa) | 33 (2) | 33 (1) | 22 (0,6) |
| $\varepsilon_R$ (%) | - 1,9 (0,1) | - 2,0 (0,1) | - 1,4 (0,06) |
| E (GPa) | 2 (0,1) | 1,9 (0,05) | 1,8 (0,07) |

( ) : écart type

Résistance au choc thermique :

a) On introduit brusquement une plaque carrée du matériau de 100 mm de côté et de 20mm d'épaisseur dans un four à moufle régulé à 1000°C. Cette température est maintenue pendant 45 minutes puis le chauffage est arrêté et le four se refroidit naturellement. On n'observe pas de dégradation apparente du matériau si ce n'est un changement de couleur et un retrait de 2% sur toutes les dimensions. La perte de masse est de 7%.

b) On obture avec une plaque du matériau de dimensions identiques à la précédente l'entrée de même section d'un four. On programme une montée rapide en température (proche de celle d'un feu conventionnel défini dans la norme ISO 834) jusqu'à 1000°C. On maintient cette température pendant deux heures puis on arrête le chauffage et on laisse le four se refroidir naturellement. Au palier de 1000°C la face chaude du matériau est à 1000°C et la face froide atteint la température de 320°C où elle se stabilise. On n'observe pas de dégradation apparente du matériau. La plaque présente un léger bombement dont la flèche est de 0,15 mm.

EXAMPLE 4

On prépare une matière isolante avec les mêmes constituants et de la même façon qu'à l'exemple 3. Avant de l'introduire dans le moule, on place un tissu en polyester multi-filaments, tricoté, (masse surfacique 310g/m$^2$, ouverture de maille 3x1,5mm$^2$) sur les faces intérieures du moule. Sous l'effet de la pression, le tissu est imprégné par le liant et on obtient une pièce de 20mm d'épaisseur dont les faces supérieure et inférieure sont revêtues.

Les propriétés de cette pièce, après séchage à 60°C en étuve quelques heures, sont les suivantes :

. Densité apparente : 1,1
. Compression : résultats identiques à ceux de l'exemple 3
. Flexion : Résistance $\sigma_R$ = 8,1 MPa        Module        E = 4,1 GPa
. Choc Charpy :        R = 16,4 kJ/m$^2$.

Les deux morceaux de l'éprouvette restent reliés par le revêtement.

**Revendications**

1. Matériau isolant thermique, caractérisé en ce qu'il est constitué par (1) 40 à 95 % en volume par rapport au volume total du matériau d'un liant minéral microporeux qui résulte de la réaction de polycondensation minérale d'une composition à base de silico-aluminates alcalins et par (2) 5 à 60 % en volume par rapport au volume total du matériau de charges minérales réfractaires sous forme de particules granulaires poreuses et/ou creuses de dimension supérieure ou égale à 5 microns et/ou sous forme de fibres courtes.

**2.** Matériau selon la revendication 1, caractérisé en ce que le liant est un poly(sialate) et/ou poly(sialate-siloxo) de sodium et/ou de potassium.

**3.** Matériau selon la revendication 1, caractérisé en ce que le liant est un poly(sialate-disiloxo) de potassium.

**4.** Matériau selon l'une quelconque des revendications 1 à 3, caractérisé en ce que le volume des charges est compris entre 15 et 55 % par rapport au volume total du matériau.

**5.** Matériau selon la revendication 1, caractérisé en ce que les charges minérales réfractaires ont une température de fusion ou de transformation supérieure ou égale à 1200°C.

**6.** Matériau selon la revendication 1, caractérisé en ce que les particules ont une répartition granulométrique dispersée et les fibres courtes ont un diamètre inférieur ou égal à 100 microns et une longueur inférieure ou égale à 10 millimètres.

**7.** Matériau selon la revendication 1, caractérisé en ce qu'il comporte au moins un renfort constitué par un ou plusieurs mats, feutres ou tissus identiques ou différents de nature minérale, organique et/ou métallique.

**8.** Matériau selon la revendication 7, caractérisé en ce que la matière des renforts est choisie parmi le verre, les céramiques, les polyesters, les aramides, l'acier inoxydable et le cuivre.

**9.** Matériau selon la revendication 7 ou 8, caractérisé en ce que le renfort revêt une ou plusieurs faces du matériau isolant.

**10.** Matériau selon la revendication 7, caractérisé en ce qu'il est sous forme de panneau dont les deux faces sont chacune revêtues par un renfort comprenant un tissu métallique placé du côté du matériau et par un mat de verre côté extérieur.

**11.** Procédé de fabrication d'un matériau isolant selon la revendication 1, caractérisé en ce qu'on effectue le mélange du liant et des charges, on le met en forme et on le fait durcir par chauffage en évitant l'évaporation de l'eau qu'il contient.

**12.** Procédé de fabrication selon la revendication précédente, caractérisé en ce que un ou des renforts sont ajoutés avant le durcissement du mélange.

**13.** Procédé de fabrication selon la revendication 11 ou 12, caractérisé en ce que le durcissement est effectué à une température de 40° à 150°C.

**14.** Procédé selon la revendication 11, 12 ou 13, caractérisé en ce que le matériau est séché après durcissement.

**Patentansprüche**

**1.** Thermisches Isoliermaterial, dadurch gekennzeichnet, daß es aus folgenden Bestandteilen besteht: (1) 40 bis 95 Vol.-%, bezogen auf das Materialgesamtvolumen, eines mineralischen mikroporösen Bindemittels, das durch anorganische Polykondensationsreaktion einer Verbindung auf Basis alkalischer Aluminiumsilikate gewonnen wird, und (2) 5 bis 60 Vol.-%, bezogen auf das Materialgesamtvolumen, hitzebeständigen mineralischen Füllstoffen, die als poröse und/oder hohle Partikelkörnchen in den Abmessungen $\geq 5 \mu m$ und/oder als kurze Fasern vorliegen.

**2.** Material nach Anspruch 1, dadurch gekennzeichnet, daß das Bindemittel ein Poly(sialat) und/oder ein Poly-(siloxo-sialat) von Natrium und/oder Kalium ist.

**3.** Material nach Anspruch 1, dadurch gekennzeichnet, daß das Bindemittel ein Poly(disiloxo-sialat) von Kalium ist.

**4.** Material nach einem der Ansprüche 1 bis 3, dadurch gekennzeichnet, daß das Volumen der Füllstoffe von 15 bis 55 %, bezogen auf das Materialgesamtvolumen, beträgt.

**5.** Material nach Anspruch 1, dadurch gekennzeichnet, daß die hitzebeständigen mineralischen Füllstoffe eine Schmelz- oder Umwandlungstemperatur ≥ 1200°C aufweisen.

**6.** Material nach Anspruch 1, dadurch gekennzeichnet, daß die Partikel eine streuende Korngrößenverteilung und die kurzen Fasern einen Durchmesser ≤ 100 µm und eine Länge ≤ 10 mm aufweisen.

**7.** Material nach Anspruch 1, dadurch gekennzeichnet, daß es wenigstens eine Verstärkung aufweist, die aus einer oder mehreren Matten, Filzlagen oder Textilien besteht, die identisch oder verschieden und mineralischen, organischen und/oder metallischen Ursprungs sind.

**8.** Material nach Anspruch 7, dadurch gekennzeichnet, daß die Verstärkung unter Glas, keramischen Materialien, Polyestern, Aramiden, rostfreiem Stahl und Kupfer ausgewählt wird.

**9.** Material nach Anspruch 7 oder 8, dadurch gekennzeichnet, daß die Verstärkung eine oder mehrere Seiten des Isoliermaterials bedeckt.

**10.** Material nach Anspruch 7, dadurch gekennzeichnet, daß es als Platte vorliegt, deren beide Seiten jeweils zum einen von einer Verstärkung bedeckt sind, die ein Drahtgeflecht enthält und an der Materialseite anliegend angebracht wird, und zum anderen von einer Glasmatte, die an der Außenseite angebracht wird.

**11.** Verfahren zu Herstellung eines Isoliermaterials nach Anspruch 1, dadurch gekennzeichnet, daß Bindemittel und Füllstoffe vermischt werden, die Mischung geformt und durch Erhitzen gehärtet wird, wobei ein Verdampfen des darin enthaltenen Wassers vermieden wird.

**12.** Herstellungsverfahren nach dem vorhergehenden Anspruch, dadurch gekennzeichnet, daß eine oder mehrere Verstärkungen der Mischung vor dem Härten beigefügt werden.

**13.** Herstellungsverfahren nach Anspruch 11 oder 12, dadurch gekennzeichnet, daß das Härten bei einer Temperatur von 40 bis 150 °C durchgeführt wird.

**14.** Herstellungsverfahren nach Anspruch 11, 12 oder 13, dadurch gekennzeichnet, daß das Material nach dem Härten getrocknet wird.

**Claims**

**1.** Thermal insulation material, characterized in that it is constituted by (1) 40 to 95 % by volume with respect to the total volume of the material of a microporous inorganic binder which results from the inorganic polycondensation reaction of a composition based on alkaline aluminosilicates and by (2) 5 to 60 % by volume with respect to the total volume of the material of refractory inorganic fillers in the form of porous and/or hollow granular particles of size greater than or equal to 5 microns and/or in the form of short fibres.

**2.** Material according to Claim 1, characterized in that the binder is a sodium and/or potassium poly(sialate) and/or poly(siloxosialate).

**3.** Material according to Claim 1, characterized in that the binder is a potassium poly(disiloxosialate).

**4.** Material according to any one of Claims 1 to 3, characterized in that the volume of the fillers is between 15 and 55 % with respect to the total volume of the material.

**5.** Material according to Claim 1, characterized in that the refractory inorganic fillers have a melting or transformation temperature greater than or equal to 1200°C.

**6.** Material according to Claim 1, characterized in that the particles have a broad particle-size distribution and the short fibres have a diameter less than or equal to 100 microns and a length less than or equal to 10 millimetres.

**7.** Material according to Claim 1, characterized in that it includes at least one reinforcement constituted by one or more identical or different mats, felts or fabrics of inorganic, organic and/or metallic nature.

8. Material according to Claim 7, characterized in that the material of the reinforcements is chosen from glass, ceramics, polyesters, aramids, stainless steel and copper.

9. Material according to Claim 7 or 8, characterized in that the reinforcement coats one or more faces of the insulation material.

10. Material according to Claim 7, characterized in that it is in the form of panels, the two faces of which are each coated with a reinforcement comprising a metallic fabric placed on the material side and with a glass mat on the outside.

11. Process for manufacturing an insulation material according to Claim 1, characterized in that the binder and the fillers are mixed, and the mixture shaped and cured by heating, preventing evaporation of the water that it contains.

12. Manufacturing process according to the preceding claim, characterized in that one or more reinforcements are added before the mixture cures.

13. Manufacturing process according to Claim 11 or 12, characterized in that the curing takes place at a temperature of from 40° to 150°C.

14. Process according to Claim 11, 12 or 13, characterized in that the material is dried after curing.